(19) Europäisches Patentamt
European Patent Office
Office européen des brevets

(11) **EP 3 007 082 A1**

(12) **EUROPEAN PATENT APPLICATION**

(43) Date of publication:
**13.04.2016 Bulletin 2016/15**

(51) Int Cl.:
*G06F 17/30* [(2006.01)]  *H04N 21/25* [(2011.01)]
*H04N 21/466* [(2011.01)]  *H04N 21/482* [(2011.01)]

(21) Application number: **14306570.4**

(22) Date of filing: **07.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Guegan, Marie
35576 Cesson-Sévigné (FR)**
• **Schmouker, Philippe
35576 Cesson-Sévigné (FR)**

(74) Representative: **Huchet, Anne
Technicolor
1-5 rue Jeanne d'Arc
92130 Issy-Les-Moulineaux (FR)**

(54) **Method for computing a similarity measure for video segments**

(57) The digital comments of the viewers who posted comments on videos are used to determine a similarity measure between two video segments. The results include the two similar video segments and a video similarity score between the two video segments based on the social network of the viewers who commented on the video. One advantage is to be able to provide recommendations to viewers of videos, video creators, etc. The social network of the user asking to find the similarity of pairs of videos is not considered because only the social network of the viewers and commenters of a video segment is used as a source of digital comments.

Fig 2

## Description

## FIELD

The present invention relates to video processing, and in particular, the invention is related to a method for computing a similarity measure between segments of videos based on social network analysis.

## BACKGROUND

Sharing video clips or video segments has become an entertaining aspect of digital exchanges. Various websites on the Internet sometimes feature entire videos, video clips, or video segments that are newsworthy or are entertaining. Social media has also engaged in video sharing where one social media user shares a video segment with another social media user. In one sharing scenario, a video segment is first determined by one user to be worthy enough for sharing with a friend user by making a personal determination of how a new video segment compares to an older video segment that the friend user likes before sharing the new video segment with the friend user. Thus, a method of performing a comparison of one video segment to another video segment to determine a similarity is of interest.

In an article by Liang Gou, Hung-Hsuan Chen, Jung-Hyun Kim, Xiaolong (Luke) Zhang, and C. Lee Giles, entitled "SNDocRank: a social network-based video search ranking framework", published in 2010 in the Proceedings of the International Conference on Multimedia Information Retrieval, ACM, New York, NY, USA, pages 367-376, one technique of similarity comparison is to first compute the similarity of a video document with a keyword search query and by using the social network of the user who entered the query. This technique uses social scores, relations between social network members, text descriptions, audio features, or image features that characterize the videos, such as comments about a sports game, or other aspect of a video segment. In addition, this technique only allows for the comparison of a video segment with a keyword search query, and not with another video segment directly.

Thus, a continuing need exists for other, simpler, and more accurate techniques for determining a similarity measure of a video segment. For example, there currently does not exist a measure of video segment similarity that takes into account a social network of viewers that digitally commented on video segments.

## SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

In one aspect a method for generating a similarity measure of video segments includes selecting a video segment, by a user who viewed the video segment. A social network of other viewers who commented on the video segment is accessed to identify other viewers who viewed and commented on the selected video segment. A similarity score is assigned to each pair of the other viewers and a grouping of the other viewers into clusters is performed. A similarity is determined and links are established between video segments identified by the comments from the other viewers. Pairs of similar video segments and their associated comments are assembled and a similarity score to each pair of video segments is assigned. The results are a triplet of similar video segments and a similarity score which can be provided to the user.

An apparatus for generating a similarity measure of video segments includes a network interface to communicate with a social network of viewers of a video segment who commented on the video segment. A social network module assigns a similarity score to each pair of the viewers and groups the viewers into clusters. A linking module establishes links between video segments identified by the comments from the viewers. The linking module arranges pairs of similar video segments and associated comments together. A similarity module assigns a similarity score to each pair of video segments. A display device displays similar videos segments to a user of the apparatus.

Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

## BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.

Figure 1 illustrates a typical system in which the invention may be practiced;
Figure 2 depicts a functional diagram of elements of the invention;
Figure 3 illustrates an example method of aspects of the invention; and
Figure 4 illustrates an example apparatus block diagram containing aspects of the invention.

## DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

The problem of computing a similarity measure between video segments is addressed with a novel technique as described herein. The video segments may belong to the same or different videos. Use is made of digital comments, being published on dedicated Web forums or on blogs, that are attached to these video segments, in order to link together some of those video segments. Also used is the social network of viewers who posted these digital comments in order to link the video segments of related viewers. The current invention takes into account a social network of viewers that digitally commented on these video segments. One aspect of the invention is that similarities between pairs of segments of video documents are compared in addition to the reliance on the social network of the viewers who commented on the video segments.

A video segment is a continuous interval of video images in a video document. A video document is herein also called a "video". A video segment is defined with a starting timecode and an ending time code. A viewer is a user who posted one or more digital comments on one or more videos or video segments. A comment is a digital document that is attached with a particular video and that is characterized by a set of text tags or keywords. The comment may be any type of multimedia document such as video, audio or text document. Some comments are synchronized with the videos' timeline, meaning that for each of these synchronized comments, there is a known link to a time point in the video segment.

In overview, according to aspects of the invention, assume a primary user has a selected a set of video documents or video segments ("videos"). For each video, assume a set of digitized comments from other viewers that have been synchronized to their video's timeline. According to the invention, it is desirable to compute the similarity between segment $s_i$ in video $v_i$ and segment $s_j$ in video $v_j$.

Segments $s_i$ and $s_j$ are each described by a set of digital comments $C_i$ and $C_j$. Each comment $c_k$ in $C_i$ (or respectively $c_l$ in $C_j$) has been posted by a viewer $u_k$ (or respectively viewer $u_l$). According to aspects of the invention, using the social network of other viewers who commented on the video segment, a social network algorithmic module infers a similarity measure between viewers $u_k$ and $u_l$ and uses it to build and evaluate clusters of viewers grouped together according to their similarity measures.

An algorithmic linking module then links together video segments: Two video segments $s_i$ and $s_j$ are then considered similar if there exist at least a digital comment $c_k$ on $s_i$ and a digital comment $c_l$ on $s_j$ that were posted by viewers $u_k$ and $u_l$, where $u_k$ and $u_l$ belong to the same viewer/commenter cluster, and where $c_k$ and $c_l$ share at least one tag or keyword. Please notice that video segments may belong to the same video.

According to an aspect of the invention, a similarity module assigns a similarity score based on the similarity of the viewers and on the similarity of their digital comments for each pair of similar video segments $s_i$ and $s_j$. These similar video segments may then be presented to one or more users so that the one or more users may benefit from the additional discovered similarity measures. Similar video segments as well as commenting views may then be shared via communication such as social networks.

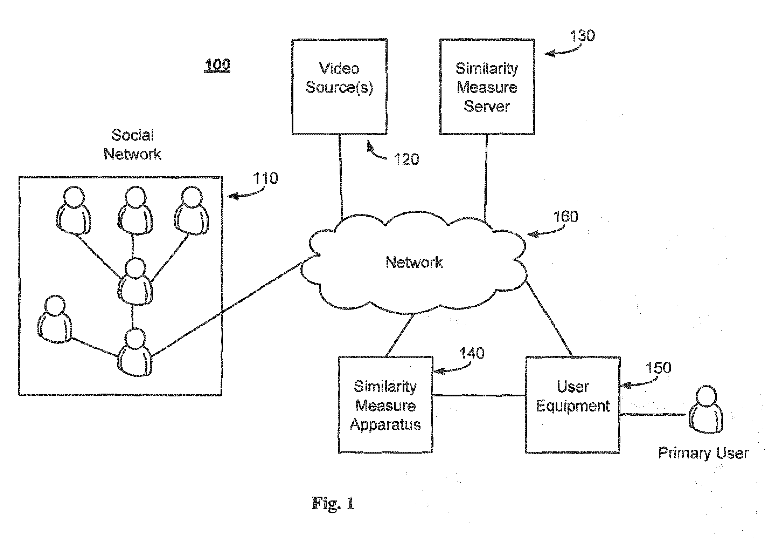

Figure 1 depicts an environment 100 that supports the operation of the current invention. As shown a user, having access to user equipment 150, such as a PC, laptop, tablet, or other web accessible device, is able to communicate via network 160 to web entities. Such web entities include, but are not limited to a social network 110 of the user, and one or more video sources 120, such as YouTube™, Hulu™, subscription and non-subscription websites, and the like. The present invention can provide a similarity measure between video segments for one or more users. The measure of similarity may be provided to a user via a web-based server 130 such as shown in Figure 1. Alternately, the similarity measure may be provided by an apparatus 140 connected locally to the user equipment 150. In either instance, the features provided by the similarity measure determination can be the same. That is, the current invention may be implemented as a web-based server 130 or locally configured similarity measure apparatus 140.

In either instance, a user, operating the user equipment 150 can obtain a similarity measure of two video segments where that information can be utilized to provide the user recommendation for videos or the opportunity for recommendations of user social connection. For convenience, the user of user equipment 150 is referred to herein as the primary user.

In the web-server embodiment, a web site can identify or host videos and viewer digital comments associated with these videos in a YouTube™ like fashion. Comments could also be pictures or photographs, posted on an Instagram™ like web site, and associated with tags posted by users. Registered users of the server implementation have the possibility to post digital comments in the feed of videos. They may also explicitly specify the time point in the video that is being discussed. For example, they can write "LOL 3:24" which would mean something funny is happening at time 3:24 (three minutes and 24 seconds) into a specific video.

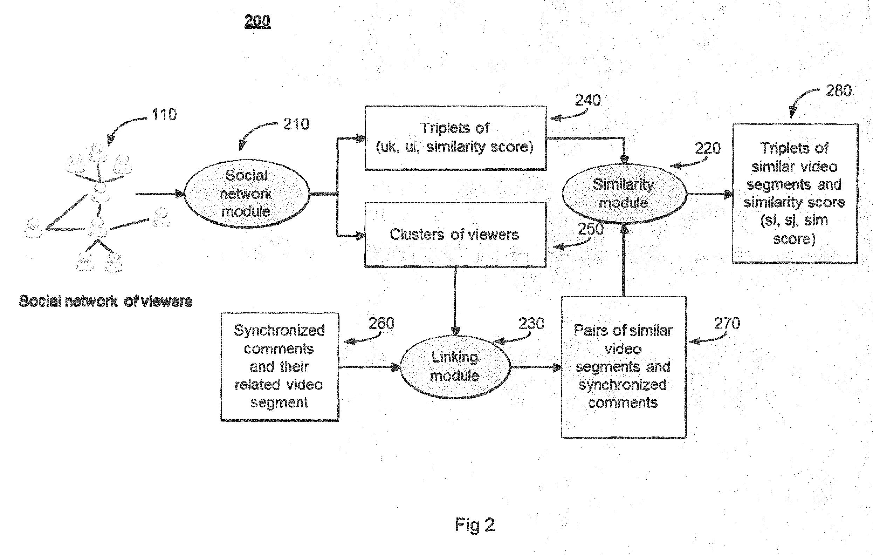

Figure 2 illustrates a functional diagram 200 of aspects of the current invention. As shown, the social network 110 of viewers/commenters of video segments is shown. In the instance of a single user, for example, the single user of user equipment 150, the social network is the social network of the viewers and commenters of video segments and not the social network of the primary user. Generally, the primary viewer can be a commenter of a video segment. The primary user/viewer selects one or more video segments (one or a set of video segments) to initiate finding video segments similar to the selected one or set of video segments. The social network 110 has multiple video segment viewers who are also commenters. Determination of the members of the social network can be made using viewers in the one or more social networks who comment on the same videos (video segments), viewers who subscribed or follow other viewers of the video segments, friendship links, and the like. Access to the social network 110 allows a social network module 210 to identify members of the social network that viewed and commented on a video segment. The function diagram of Figure 2 indicates that the social network 110 connects functionally to the social network module 210.

The social network module 210 analyzes the social network of viewers who have been identified as those social network members who commented on a video segment. The social network module assigns a viewer similarity score to each pair of identified video segment viewers based on known social network analysis methods that take into account the links between viewers and also some external features optionally (e.g. areas of interest, categorization of user - leader, follower, instigator, ..., etc.) Using this viewer similarity score, the social network module 210 automatically builds and evaluates groups of viewers who have commented on one or more video segments (i.e. viewers clusters) using traditional clustering methods (hierarchical clustering, k-means, etc.). This social network member clustering may be built considering the viewers who commented on the whole set of videos, or only viewers who commented on a subset of pre-selected video segments. As a result of this step, each pair of viewers is assigned a viewer similarity score and all viewers are grouped into a certain number of clusters, each viewer appearing in one and only one cluster. Triplets of viewer uk, viewer ul, and their viewer similarity score are output 240 from the social network module 210. These triplets may be placed into a memory for subsequent use. Also, the social network module outputs a clustering of viewers 250. These user clusters may also be placed into a memory for subsequent use.

The linking module 230 accesses all video segments and their synchronized comments 260 and establishes links between the video segments. A synchronized comment can be a time synchronized comment relating to a specific time mark in a video segment or a comment that is simply associated with (synchronized) with the video segment. The synchronized comments and the related video segments are functionally obtained by accessing the comments and related video segments of members in the social network 210. Then, the synchronized comments and their related video segments are stored in memory for subsequent use by the linking module. The linking module accesses the clusters of viewers 250 from memory as well as the synchronized (associated) comments and related videos 260. Memory can be any kind of data storage, such as static or dynamic random access memory (RAM), flash memory, magnetic or optical disk memory, remote or local memory, volatile or non-volatile memory, and the like. Memory used by any of the modules of Figure 2 can be integrated or external to the module itself. In the linking module 230, two video segments are linked and declared as being similar if they were commented on by viewers from the same cluster and if those digital comments had at least one feature (keyword or tag) in common. The linking module 230 returns (outputs) pairs of similar video segments, together with their synchronized (associated) comments 270 and the corresponding comment similarity scores indicative of the similarity of each pair of comments of the paired video segments. Thus, there is one comment similarity score for each pair of comments. Such results 270 are placed in memory for subsequent use by the similarity module 220.

The task of the similarity module 220 is to assign a similarity score to each pair of video segments. The similarity module 220 combines triplet of users/viewers and viewer similarity scores 240 corresponding to the video segment pairs and synchronized comments and comment similarity scores 270 using, for example, a weighted mean. The output is a triplet 280 of similar video segments (segment si and segment sj) and a final video similarity score (sim score). This result is then useful for many purposes.

One use is to provide recommendations of video segments for the primary user. In another embodiment, the triplet 280 can also be used to recommend video segments to viewers who have commented on similar video segments. This implies that viewers are not necessarily recommended video segments commented by someone from their viewer cluster, but also from other clusters. In another embodiment, the triplet 280 can be used to recommend a video creator to another video creator if the videos they created share similar segments. In another embodiment, the triplet 280 is useful for recommending similar video segments for all segments in a given video, presented as alternatives for the user or for the creator of the video. In another use of triplet 280, results can be used to connect viewers of similar areas of interest in order to get more digital comments and better later recommendations. Other advantages and uses include enriching users' experience by providing new content discovery.

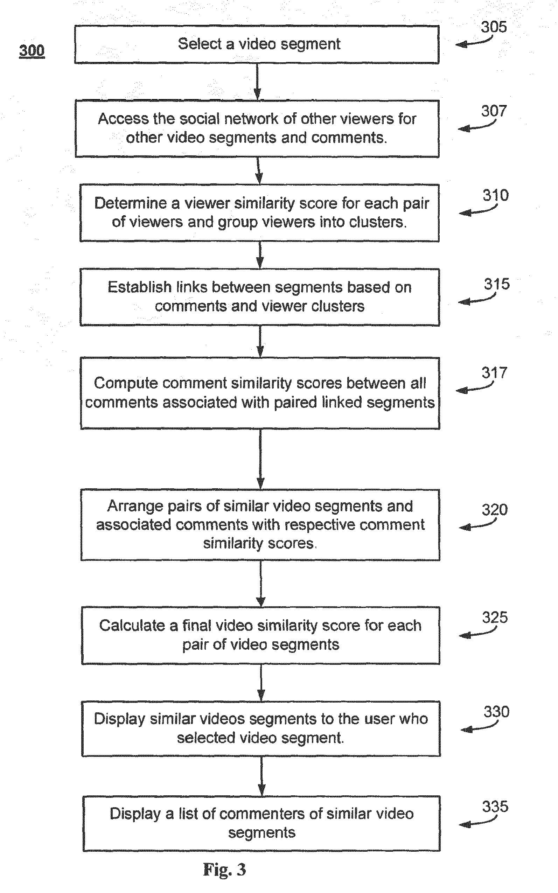

Figure 3 is an example method 300 of the generation and use of obtaining a similarity measure of video segments using the social network of viewers that have commented on a video segment. At step 305, one or more video segments are selected by the user to initiate a search for similar video segments. At step 307, comments made by other viewers (other than the primary user/viewer, i.e. other viewers) on the video segment are sought and are accessed using network resources, such as the Internet. The other viewers are identified as being viewers that have commented on the selected video segment or segments. These other viewers are members of at least one social network. The social networks of the other viewers are also accessed to find more video segments that are similar to the selected video segment. The source of more reviewed video segments is the social network of the other users who commented on the selected video segment. Using the social network of the other viewers is useful to determine a set of other viewers/commenters of video segments. In this way, more viewers and other video segments that have comments may be found. Thus, at step 307, a set of video segment commenters is obtained by using the social network of the other viewers that commented on the selected video segment. It is noted that the other viewers are not required be on-line for the method 300 to be performed. Video segments and related comments are available regardless of the on-line status of any of the other viewers in their social networks. It is the video segments and the associated comments that are accessed, not the other viewers.

Step 310 of method 300 determines a viewer similarity score for each pair of viewers. For example, the viewer similarity score between two viewers may be the percentage of common viewers that both viewers share in their neighborhood in the social network. Once a viewer similarity score is obtained, step 310 also groups viewers into clusters of viewers. Each viewer appears on only one cluster. Step 310 produces viewer similarity triplets 240 and clusters 250 of Figure 2 as a result of the action of social network module 210.

Step 315 of method 300 establishes links between video segments based on synchronized comments and viewer clustering. Stated another way, this step establishes links between video segments identified by the video comments from people who are in the social network of the other viewers and commenters. Video segments identified for comment similarity checking are those video segments from viewers and commenters that are clustered together and have at least one feature (such as a video tag or keyword) in common. At step 317, a comment similarity score is computed between all comments associated (synchronized) with pairs of video segments that are linked. Once links have been established between similar video segments after similarity checking, and comment similarity scores have been computed, Step 320 arranges pairs of similar video segments and associated synchronized comments together with the same comments arranged in pairs and their respective comment similarity scores. This step essentially assembles similar video segments into pairs along with their respective comments and the respective comment similarity scores. Step 320 produces a list of the pairs of similar video segments together with their synchronized comments and comment similarity scores 270 of Figure 2 as a result of the action of the linking module 230.

Step 325 of method 300 calculates and assigns a final video similarity score to each pair of video segments listed by Step 320. Step 325 combines the viewer similarity scores of the viewer similarity triplets 240 with the pairs of similar video segments and associated comment similarity scores 270 to generate the triplets of similar video segments and a final video similarity scores (280) (sim score) for each pair of video segments. Step 325 produces the triplets of pairs of similar video segments and video similarity scores as a result of the action of the similarity module 220 of Figure 2. The triplet of final video similarity scores for corresponding pairs of video segments in step 325 is calculated using for example a weighted mean. Comment similarity scores between all video comments are computed by the linking module 230. The score may be the percentage of keywords or tags that two comments share. Then the final video similarity score for a pair of video segments may be computed as :

$$\frac{1}{n*n} * \sum_{k,l}(sim(c_k, c_l) + sim(u_k, u_l)) \,,$$

where n is the total number of comments associated with the two video segments si and sj, ck and cl are comments on si and sj, uk an ul are the viewers who produced comments ck and cl, sim(ck, cl) is the comment similarity score between comments ck and cl, and sim(uk, ul) is the viewer similarity score between viewers uk and ul. The calculated video similarity score is the measure of similarity between video segments.

Step 330 begins the utilization of the previous steps by providing a listing of similar video segments and the corresponding video similarity scores. Examples of providing a list is to access the listing for display or accessing the list for transfer to another process, computer, etc. These similar video segments are similar to the video segment that was initially selected by the primary user. In addition, other similar video segments, not selected by the primary user may be provided to be displayed. In addition, the listing may optionally include, at step 335, the respective commenters of the similar video segments. In another embodiment, not shown, the listing is available to any one or more members of a cluster group that the commenting other viewers belong.

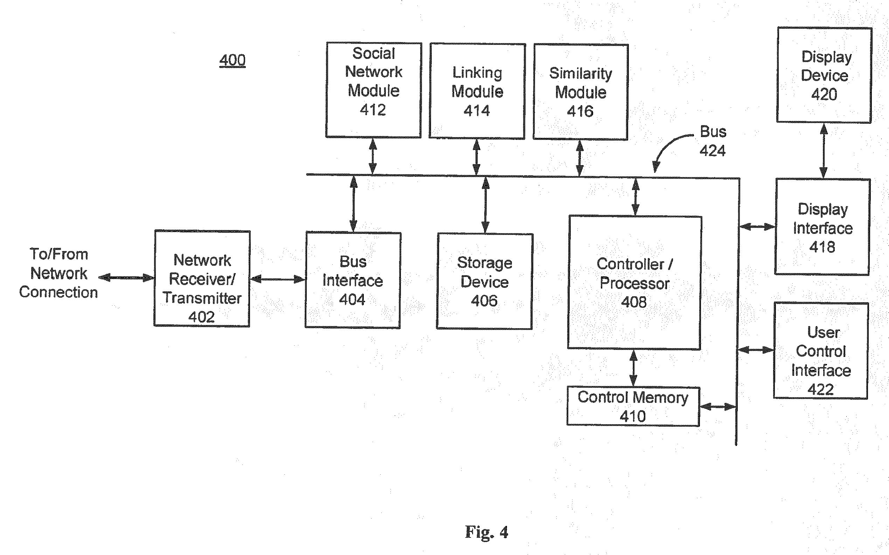

Turning now to Figure 4, a block diagram of an embodiment of an apparatus 400 that performs a similarity measure between video segments using a social network of other viewers who commented on a video segment is shown. The apparatus 400 can be included as part of a web-based server, a local server, or other device local to user equipment. For example, the apparatus 400 may be part of a gateway device, modem, set-top box, or other service device which is separate from or integrated with user equipment, such as computer, laptop, cell phone, or other similar communications device. The apparatus 400 shown can also be incorporated into other systems. In either case, several components necessary for complete operation of the system are not shown in the interest of conciseness, as they are well known to those skilled in the art. In one exemplary embodiment, apparatus 400 can be a set-top box coupled to user equipment such as a display device (e.g. television). In another embodiment, the apparatus 400 can be connected to a hand-held (i.e. mobile) or fixed location display device that allows viewing and playback of media files having a video segment.

In the apparatus 400 shown in Figure 4, video segments, reviews and comments from a social network of other viewers of a selected video segment are received by a network interface; network receiver/transmitter 402. The network receiver/transmitter 402 (network interface) can be one of several known receiver circuits used for receiving, demodulation, and decoding signals provided over one of the several possible networks including over the air, cable, satellite, Ethernet, USB, HDMI, fiber, and phone line networks. The desired input signal can be selected and retrieved by the network receiver/transmitter 402 based on user input provided through a user control interface 422 such as a mouse, keyboard, pushbuttons, touch screen, remote control, wired or wireless interfaces, and the like. In one embodiment, the network interface 402 connects to a network, such as the internet, to communicate with social networks, servers, or video segment content providers.

In one embodiment, one or more digital busses 424 interconnect the controller processor 408 with other functional blocks. One of skill in the art recognizes that non-bus-oriented topologies are also possible implementations of the media device 400. Blocks that have a bus 424 interface with the processor 408 include bus interface 404, storage device 406, and display interface 418. Functional modules, such as social network module 412, linking module 414, and similarity module 416 may be implemented in hardware, software/firmware, or a combination of both. Modules 412, 414, and 416 may be implemented together as one processing unit or may be separate as shown in Figure 4. In one embodiment, the modules are implemented as part of controller/processor 408. The controller/processor 408 can be configured to control various components of the apparatus 400. In one embodiment, the controller/processor 408 may also include the resources needed to execute all of functionality shown in Figure 2.

The decoded output signal of network receiver/transmitter 402 is provided to a bus interface 404. The bus interface 404 performs the conversion of acquired network information into bus-oriented signals and data to allow the various bus modules to perform operations on the received data. The bus 424 allows a complete communication between the occupants of the bus 424 including display interface 418 which allows a user to view at least the results of the method 300 on display device 420.

A storage device 406 stores video segment information and comments that are accessed and received at the input 402 from the social networks. The storage device 406 allows later retrieval and playback of the content under the control of a controller 408 and social network module 412, linking module 414 and similarity module 416. A user control interface 422 such as a control panel, touch screen, remote control, or other use interface allows user control of the functions of apparatus 400, such as selection of a video segment. The storage device 406 can be a hard disk drive, one or more large capacity integrated electronic memories, such as static RAM (SRAM), or dynamic RAM (DRAM), or can be an interchangeable optical disk storage system such as a compact disk (CD) drive or digital video disk (DVD) drive.

The controller/processor 408 is further coupled to control memory 410 (e.g., volatile or non-volatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller/processor 408. Control memory 410 can store instructions for controller/processor 408. Further, the implementation of the control memory 410 can include several possible embodiments, such as a single memory device or, alternatively, more than one memory circuit communicatively connected or coupled together to form a shared or common memory. Still further, the memory can be included with other circuitry, such as portions of bus communications circuitry, in a larger circuit.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art.

**Claims**

1. A method for generating a similarity measure of video segments, the method **characterized by**:

   selecting a video segment, by a viewer of the video segment(305);
   accessing a social network to identify other viewers who commented on the selected video segment (307);
   determining a viewer similarity score for each pair of the other viewers and grouping the other viewers into clusters (310);
   establishing links between video segments based on comments from the other viewers and the clusters (315);
   computing a comment similarity score between comments associated with pairs of video segments that are linked (317);
   arranging pairs of similar video segments and pairs of associated comments together with respective comment similarity scores (320);
   calculating a video similarity score for each pair of video segments (325) using a respective viewer similarity score and a respective comment similarity score; and
   providing similar videos segments to the viewer (330).

2. The method of claim 1, wherein grouping the other viewers into clusters such that each one of the other viewers appears in only one cluster.

3. The method of claim 1, wherein establishing links between video segments comprises determining a similarity between video segments from the other viewers that are clustered together.

4. The method of claim 3, further **characterized by** establishing links between video segments having at least one feature in common.

5. The method of claim 4, wherein the feature is one or more of a video tag and keyword.

6. The method of claim 3, wherein the step of establishing links between video segments establishes links between video segments identified by video comments.

7. The method of claim 1, wherein calculating a video similarity score for each pair of video segments is **characterized by** establishing a triplet of a pair of similar video segments and a video similarity score.

8. The method of claim 7, wherein the triplet is calculated using a weighted mean.

9. The method of claim 1, further **characterized by** displaying the respective commenters of the similar video segments.

10. An apparatus for generating a similarity measure of video segments, the apparatus **characterized by**:

    a network interface (402) to communicate with a social network of viewers who commented on a selected video segment;
    a social network module (412) to determine a viewer similarity score for each pair of the viewers and group the viewers into clusters;
    a linking module (414) to establish links between segments, to compute a comment similarity score between comments on video segments identified by the comments from the viewers, and to arrange pairs of similar video segments and respective comment similarity scores;
    a similarity module (416) to calculate a video similarity score for each pair of video segments; and
    a display device (420) to display similar videos segments.

11. The apparatus of claim 10, further **characterized by** memory for storing outputs from the social network module, the linking module, and the similarity module.

12. The apparatus of claim 10, where the social network module, the linking module, and the similarity module are combined in a processor (408).

13. The apparatus of claim 10 further **characterized by** a user control interface (422) to allow selection of the video segment.

14. The apparatus of claim 10, wherein the linking module determines a similarity between video segments from the viewers.

15. The apparatus of claim 14, wherein the linking module establishes links between video segments having at least one feature in common, wherein the feature is one or more of a video tag and keyword.

**Fig. 1**

EP 3 007 082 A1

Fig 2

<u>300</u>

Select a video segment — 305

Access the social network of other viewers for other video segments and comments. — 307

Determine a viewer similarity score for each pair of viewers and group viewers into clusters. — 310

Establish links between segments based on comments and viewer clusters — 315

Compute comment similarity scores between all comments associated with paired linked segments — 317

Arrange pairs of similar video segments and associated comments with respective comment similarity scores. — 320

Calculate a final video similarity score for each pair of video segments — 325

Display similar videos segments to the user who selected video segment. — 330

Display a list of commenters of similar video segments — 335

**Fig. 3**

Fig. 4

Europäisches
Patentamt

European
Patent Office

Office européen
des brevets

# EUROPEAN SEARCH REPORT

Application Number

EP 14 30 6570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/319031 A1 (LEE HAHN-MING [TW] ET AL) 16 December 2010 (2010-12-16) | 10-15 | INV. G06F17/30 |
| A | * the whole document * | 1-9 | H04N21/25 H04N21/466 |
| X | US 2012/254917 A1 (BURKITT KEVIN J [US] ET AL) 4 October 2012 (2012-10-04) | 10-15 | H04N21/482 |
| A | * the whole document * | 1-9 | |
| X | US 2012/072937 A1 (IKEDA KAZUSHI [JP] ET AL) 22 March 2012 (2012-03-22) | 10-15 | |
| A | * paragraph [0006] * * paragraph [0105] - paragraph [0238] * | 1-9 | |
| X | EP 1 999 608 A2 (MOTIONBOX INC [US] HEWLETT PACKARD DEVELOPMENT CO [US]) 10 December 2008 (2008-12-10) | 10-15 | |
| A | * the whole document * | 1-9 | |
| A | US 2009/164904 A1 (HOROWITZ STEVEN [US] ET AL) 25 June 2009 (2009-06-25) * paragraph [0025] - paragraph [0055] * | 1-15 | |
| A | EP 2 330 516 A1 (NBCUNIVERSAL MEDIA LLC [US]) 8 June 2011 (2011-06-08) * the whole document * | 1-15 | TECHNICAL FIELDS SEARCHED (IPC) H04N G06F |

The present search report has been drawn up for all claims

| Place of search | Date of completion of the search | Examiner |
|---|---|---|
| The Hague | 20 March 2015 | Belardinelli, Carlo |

EPO FORM 1503 03.82 (P04C01)

## ANNEX TO THE EUROPEAN SEARCH REPORT
## ON EUROPEAN PATENT APPLICATION NO.

EP 14 30 6570

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2015

| Patent document cited in search report | | Publication date | Patent family member(s) | | Publication date |
|---|---|---|---|---|---|
| US 2010319031 | A1 | 16-12-2010 | TW 201044298 A<br>US 2010319031 A1 | | 16-12-2010<br>16-12-2010 |
| US 2012254917 | A1 | 04-10-2012 | EP 2695379 A2<br>US 2012254917 A1<br>US 2014366068 A1<br>WO 2012135804 A2 | | 12-02-2014<br>04-10-2012<br>11-12-2014<br>04-10-2012 |
| US 2012072937 | A1 | 22-03-2012 | JP 5466119 B2<br>JP 2012070036 A<br>US 2012072937 A1 | | 09-04-2014<br>05-04-2012<br>22-03-2012 |
| EP 1999608 | A2 | 10-12-2008 | CA 2647640 A1<br>EP 1999608 A2<br>US 2010169786 A1<br>WO 2008060655 A2 | | 22-05-2008<br>10-12-2008<br>01-07-2010<br>22-05-2008 |
| US 2009164904 | A1 | 25-06-2009 | NONE | | |
| EP 2330516 | A1 | 08-06-2011 | EP 2330516 A1<br>US 2011131595 A1<br>US 2013132982 A1 | | 08-06-2011<br>02-06-2011<br>23-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- SNDocRank: a social network-based video search ranking framework. **LIANG GOU ; HUNG-HSUAN CHEN ; JUNG-HYUN KIM ; XIAOLONG (LUKE) ZHANG ; C. LEE GILES.** Proceedings of the International Conference on Multimedia Information Retrieval. ACM, 2010, 367-376